# EUROPÄISCHE PATENTSCHRIFT

(11) **EP 1 499 005 B1**
(45) Veröffentlichungstag und Bekanntmachung des Hinweises auf die Patenterteilung: **17.08.2005**
(21) Anmeldenummer: 03016065.9
(22) Anmeldetag: 15.07.2003
(51) Int. Cl.: H02M 3/338

(54) **Freischwingender Sperrwandler mit Strom- und Spannungsbegrenzung**
Freely oscillating flyback converter with current and voltage limitation
Convertisseur à découpage auto-oscillant à limitation de courant et de tension

(43) Veröffentlichungstag der Anmeldung: 19.01.2005
(60) Teilanmeldung: 04010468.9
(73) Patentinhaber: Friwo Mobile Power GmbH, 48346 Ostbevern (DE)
(72) Erfinder: Schröder, Ralf, genannt Berghegger, 49219 Glandorf (DE)
(74) Vertreter: Grünecker, Kinkeldey, Stockmair & Schwanhäusser Anwaltssozietät

(56) Entgegenhaltungen:
- EP-A- 0 389 154
- EP-A- 0 852 424
- GB-A- 2 379 036
- US-A- 5 867 373
- US-A1- 2002 186 572

## Beschreibung

Die vorliegende Erfindung bezieht sich auf ein Schaltnetzteil, insbesondere auf ein Schaltnetzteil mit einer Primärseite und einer Sekundärseite, das einen Transformator mit einer primärseitigen Wicklung, einer sekundärseitigen Wicklung und mindestens einer Hilfswicklung aufweist. Die primärseitige Wicklung und die Hilfswicklung sind mit der Primärseite verbunden und die sekundärseitige Wicklung ist mit der Sekundärseite verbunden. Das Schaltnetzteil weist einen primärseitigen Schalter, der mit der primärseitigen Wicklung verbunden ist, um einen Stromfluss durch die primärseitige Wicklung zu unterbrechen, eine freischwingende Schaltung zum Erzeugen von Schaltpulsen, die den primärseitigen Schalter ansteuern, und eine Schaltung zum Erzeugen einer Bildspannung zwischen den Anschlüssen der Hilfswicklung, um eine Bildspannung zu erzeugen, die auf der Primärseite eine zu regelnde Spannung auf der Sekundärseite abbildet, auf.

Ein derartiges Schaltnetzteil ist aus der US 2002-186572 A1 bekannt.

Schaltnetzteile werden in zahlreichen elektronischen Geräten verwendet, um aus einer Netzspannung die zum Versorgen der elektronischen Bauteile notwendigen Niedervoltgleichspannung zu erzeugen. Dabei haben sich Schaltnetzteile gegenüber konventionellen Netzteilen mit Netztransformatoren in vielen Anwendungsfällen durchgesetzt, da sie ab einer gewissen Leistungsklasse einen besseren Wirkungsgrad aufweisen und insbesondere einen geringeren Platzbedarf haben.

Letzteres ist insbesondere darauf zurückzuführen, dass statt der Netzspannung eine hochfrequente Wechselspannung transformiert wird, die anstelle der üblichen Netzfrequenz von 50 Hz oder 60 Hz beispielsweise im Bereich von 20 kHz bis 200 kHz liegen kann. Da die erforderlichen Windungszahlen des Transformators umgekehrt proportional zur Frequenz sinken, lassen sich dadurch die Kupferverluste stark reduzieren und der eigentliche Transformator wird wesentlich kleiner.

Um den Wirkungsgrad weiter zu optimieren, sind insbesondere primär getaktete Schaltnetzteile bekannt, bei denen die auf Primärseite des Hochfrequenztransformators durch den Schalter, beispielsweise einen bipolaren Transistor, erzeugte Frequenz in Abhängigkeit von der auf der Sekundärseite des Netzteils anliegenden Last geregelt wird, um die übertragene Leistung zu regeln. Die zu einer solchen Regelung erforderliche Rückkopplung wird beispielsweise dadurch realisiert, dass eine an einer Hilfswicklung abgegriffene Spannung als Regelgröße verwendet wird. Ein entsprechendes Verfahren zur Regelung des Ausgangsstroms und/oder der Ausgangsspannung ist in der EP 1 146 630 A2 beschrieben und beinhaltet, dass mit jedem Puls die gleiche Energie in den Transformator geladen wird. Allerdings hat die in diesem Dokument gezeigte Schaltungsanordnung den Nachteil, vergleichsweise aufwendig aufgebaut zu sein, da als Ansteuerschaltung eine relativ komplexe integrierte Schaltung eingesetzt wird.

Die preisgünstigste Art, ein Schaltnetzteil mit galvanischer Trennung zwischen Primär- und Sekundärteil aufzubauen, ist ein freischwingender Sperrwandler. Diese Netzteilart hat jedoch grundsätzlich den Nachteil, dass bei geringer Last die Schaltfrequenz deutlich ansteigt. Dies hat zur Folge, dass die Verlustleistung im Leerlauf und bei geringer Belastung groß ist.

Eine indirekte Messung der Ausgangsspannung durch eine Messung der Spannung an einer primären Hilfswicklung oder der primären Hauptwicklung ist bei diesem Netzteiltyp erschwert. Durch die induzierte Spannung der Streuinduktivität entsteht nämlich eine kurzzeitige Spannungsüberhöhung, die man bei großer Pulsbreite auf einfache Weise herausfiltem kann, so dass es möglich ist, die Sekundärspannung relativ genau zu bestimmen. Bei geringer Last sinkt die Pulsbreite jedoch soweit ab, dass es kaum noch möglich ist, die induzierte Spannung der Streuinduktivität herauszufiltern. Somit kann die Ausgangsspannung bei geringer Last nur noch sehr ungenau bestimmt werden. Ein Beispiel für eine derartige einfache diskrete Schaltungstechnik ist der britischen Offenlegungsschrift GB 02379036 zu entnehmen. Bei dieser Schaltung wird, um den Nachteilen einer unbefriedigenden Regelgenauigkeit zu begegnen, die Verwendung eines Optokopplers vorgeschlagen. Ein derartiger Optokoppler jedoch erhöht wiederum die Komplexität und die Kosten des gesamten Schaltnetzteils.

Daher besteht die Aufgabe, die der vorliegenden Erfindung zugrunde liegt, darin, ein gattungsgemäßes Schaltnetzteil anzugeben, das bei reduzierter Komplexität eine verbesserte Regelungscharakteristik sowie eine erhöhte Flexibilität bezüglich der Betriebsparameter ermöglicht.

Diese Aufgabe wird durch ein Schaltnetzteil mit den Merkmalen des Patentanspruchs 1 gelöst. Vorteilhafte Weiterbildungen des erfindungsgemäßen Schaltnetzteils sind Gegenstand mehrerer Unteransprüche.

Die vorliegende Erfindung basiert auf der Erkenntnis, dass mit Hilfe einer Zeitsteuerungseinheit, die so mit dem primärseitigen Schalter gekoppelt ist, dass die Dauer einer Ausschaltzeit des primärseitigen Schalters innerhalb eines Schaltzyklus einstellbar, insbesondere verlängerbar ist, bei einer geringen Last eine geringe Schaltfrequenz beibehalten werden kann und dadurch eine genaue Spannungsregelung sowie das Einstellen verschiedener Ausgangsstromkennlinien möglich ist. Darüber hinaus ist das erfindungsgemäße Schaltnetzteil aus wenigen preiswerten Bauteilen aufgebaut. Das erfindungsgemäße Schaltnetzteil bietet also den Vorteil geringer Kosten bei gleichzeitig genauer Ausgangsspannungsregelung, geringer Leerlaufeingangsleistung, sowie einer äußerst variablen Einsetzbarkeit. Schließlich besitzt das erfindungsgemäße Schaltnetzteil auch den Vorteil eines Kurzschlussschutzes.

Gemäß einer vorteilhaften Ausführungsform weist die Zeitsteuerungseinheit einen Ansteuerkondensator auf, über dessen Ladestrom die Ausschaltzeit des primärseitigen Schalters einstellbar ist. Auf diese Weise kann sowohl eine Beschleunigung des Einschaltvorganges wie auch eine Beschleunigung des Abschaltvorganges erreicht werden. Die Abschaltdauer des primärseitigen Schalters kann über den Ansteuerkondensator auf besonders einfache Weise verlängert werden. Somit wird die übertragene Leistung so eingestellt, dass sich eine nahezu lastunabhängige Ausgangsspannung ergibt. Die Erfassung der Ausgangsspannung auf der Primärseite wird dabei dadurch erleichtert, dass die übertragene Energie mit jedem Puls gleich ist, so dass sich immer eine relativ lange Zeit ergibt, während der in der Sekundärwicklung Strom fließt. Kurze Spannungsspitzen, die durch Streuinduktivität entstehen, können bei dem erfindungsgemäßen Schaltnetzteil mit Hilfe von RC-Gliedern herausgefiltert werden.

Sieht man in der Zeitsteuerungseinheit eine Diode vor, die den Ladestrom des Ansteuerkondensators während der Ausschaltzeit des primärseitigen Schalters begrenzt, kann das Aufladen des Ansteuerkondensators verhindern und die Leistungssteuerung über die Ausschaltdauer auf besonders effiziente und einfache Weise ermöglicht werden.

Ein kontrollierter Ladestrom für den Ansteuerkondensator kann in besonders wirkungsvoller Weise durch eine Ladestromsteuerschaltung erreicht werden, die zwischen dem Eingangsanschluss des Schaltnetzteils und dem Steueranschluss des primärseitigen Schalters angeordnet ist.

Eine Schwingungsunterdrückungsschaltung kann gemäß einer vorteilhaften Weiterbildung der vorliegenden Erfindung vorgesehen werden, um unerwünschte Schwingungen im Ansteuerkreis des primärseitigen Schalters zu unterdrücken und dadurch die Regelgenauigkeit zu erhöhen.

Eine Phasenschieberschaltung kann zum phasenverschobenen Abschalten des primärseitigen Schalter vorgesehen sein, um den Abschaltvorgang des primärseitigen Schalters zu beschleunigen und dadurch den Wirkungsgrad des gesamten Schaltnetzteils zu erhöhen.

Gemäß einer weiteren Ausführungsform ist die Zeitsteuerungseinheit so ausgebildet, dass während einer Einschaltzeit des primärseitigen Schalters ein Regelsignal deaktivierbar ist. Dadurch können in sehr effizienter Weise variable Pausen und konstante Pulse beim Freischwinger erreicht werden.

Gemäß einer vorteilhaften Ausführungsform weist das erfindungsgemäße Schaltnetzteil zwei primärseitige Hilfswicklungen auf, mit deren Hilfe ebenfalls die Abschaltdauer des primärseitigen Schalters gesteuert werden kann. Damit können geringe Schaltfrequenzen bei geringer Last sowie eine sinkende Verlustleistung im Leerlauf erreicht werden. Die Sekundärspannung kann relativ genau an den primären Hilfswicklungen bestimmt werden.

Verbindet man eine der Hilfswicklungen über eine Diode und einen Transistor mit dem primärseitigen Schalter, so kann an der Anode der Diode ein Strom eingespeist werden, mit dem die Einschaltzeit des Transistors verlängert wird, ohne die Abschaltschwelle zu beeinflussen. Während der Einschaltzeit des primärseitigen Schalters wird an der Anode der Diode eine negative Spannung erzeugt. Alternativ kann auch die Serienschaltung aus zwei Dioden oder aus zwei Widerständen verwendet werden. Zur Spitzenstrombegrenzung für die Diode kann ein zusätzlicher Widerstand vorgesehen werden.

Verbindet man die eine der Hilfswicklungen über eine zweite Diode so mit einem Kondensator, dass dieser auf die zu regelnde Spannung auf der Sekundärseite aufladbar ist und dass in Abhängigkeit von der an dem Kondensator anliegenden Spannung ein Strom durch die Diode, einen Widerstand, eine dritte Diode und die Basis-Emitter-Strecke des Transistors fließt, der mittels der Einschaltdauer des Transistors das Einschalten des primärseitigen Schalters verzögert, kann eine spannungsgeregelte Einstellung der Ausschaltdauer des primärseitigen Schalters erfolgen. RC-Glieder, die mit einem Steueranschluss des primärseitigen Schalters und mit der ersten Hilfswicklung verbunden sind, können in der Ansteuerschaltung ein relativ niederohmiges Umschalten bei relativ geringem Haltestrom ermöglichen. Durch die Kombination eines relativ großen Kondensators mit einem großen Widerstandswert kann außerdem der primärseitige Schalter verzögert eingeschaltet werden, da die Energie in dem Kondensator nur langsam abgebaut wird. Dies ermöglicht eine kontinuierliche Anpassung an die Last.

Eine Verbesserung des Regelverhaltens bei sehr geringer Last ist mit Hilfe einer Überspannungsschutzschaltung möglich. Durch diese Schaltung werden bei steigender Ausgangsspannung die Ansteuerkondensatoren schneller entladen und langsamer geladen. Dadurch sind sehr lange Pausenzeiten möglich, die automatisch bei steigender Ausgangsspannung verlängert werden. Diese Schaltung wirkt als Überspannungsschutz und verhindert bei einem einfachen Fehler ein gefährliches Ansteigen der Ausgangsspannung.

Gemäß einer vorteilhaften Ausführungsform weist die Ladestromsteuerschaltung eine erste Zener-Diode auf, die so über einen Widerstand mit der Basis eines Ansteuertransistors verbunden ist, dass die Einschaltdauer des Ansteuertransistors das Einschalten des primärseitigen Schalters verzögert. Damit kann eine Funktionsweise erreicht werden, die im wesentlichen der oben beschriebenen entspricht, wobei jedoch die Regelung des Ladestroms für den Ansteuerkondensator vereinfacht realisiert werden kann. Ein wesentlicher Vorteil ist ein reduzierter Bauteilebedarf

Weiterhin kann die Abschaltung des Hauptschalters durch eine Zener-Diode, welche die Spannung an der Reihenschaltung der Basis-Emitter-Strecke des Hauptschalters mit einem Widerstand begrenzt, erfolgen. Bei Erreichen der Z-Spannung kann der Stromfluss durch den primärseitigen Schalter nicht weiter ansteigen. Dadurch sinkt die Spannung an dem Transformator und die Mitkopplung bewirkt ein schnelles Abschalten.

Die Temperaturabhängigkeit des Ausgangsstromes kann mit Hilfe einer Temperaturkompensationsschaltung auf einfache Weise verringert werden.

Gemäß einer vorteilhaften Weiterbildung der vorliegenden Erfindung kann die Spannungsregelung mittels eines Optokopplers und einer sekundärseitigen Regelschaltung ausgeführt werden. Dabei wird der Optokoppler so angesteuert, dass er bei Unterschreitung der Regelspannung leitend ist. Dadurch läuft das Schaltnetzteil mit maximaler Frequenz, wobei die Frequenz durch einen zum Optokoppler in Reihe geschalteten Widerstand begrenzt wird. Bei Erreichen der Regelspannung wird der Optokoppler soweit gesperrt, dass die Schaltfrequenz auf die Frequenz absinkt, die erforderlich ist, um die Regelspannung am Ausgang aufrecht zu erhalten. Ist der Optokoppler vollständig gesperrt, geht die Schaltfrequenz auf die Minimalfrequenz zurück, bei der nur eine sehr geringe Leistung übertragen wird. In diesem Zustand ist die aufgenommene Leistung der Schaltung sehr gering und es ist somit möglich, trotz der sehr geringen Leerlaufeingangsleistung auch im Leerlauf den Spannungsripple relativ klein zu halten.

Eine Strombegrenzung kann dabei auf der Sekundärseite realisiert werden und den selben Optokoppler nutzen. Alternativ kann die Strombegrenzung auch auf der Primärseite realisiert werden. Dabei wird zur Ansteuerung des primärseitigen Schalters (über den Optokoppler und Vorwiderstand) eine Spannung aus einer Hilfswicklung benutzt, die proportional zur Ausgangsspannung ist. Dadurch sinkt bei fallender Ausgangsspannung der Ladestrom des Ansteuerkondensators und die Frequenz sinkt. Es wird eine geringere Leistung übertragen und der Ausgangsstrom bleibt z. B. nahezu konstant. Durch verschiedene Dimensionierungen sind unterschiedliche Ausgangskennlinien möglich. Allen gemeinsam ist, dass der Kurzschlussstrom sehr gering ist, da im Kurzschluss der Optokoppler gesperrt ist. Neben geringen Kosten und einer exakten Ausgangsspannungsregelung bietet diese Ausführungsform also auch den Vorteil einer geringen Leertaufeingangsleistung und eines Kurzschlussschutzes.

Anhand der in den beiliegenden Zeichnungen dargestellten Ausgestaltungen wird die Erfindung im folgenden näher erläutert. Ähnliche oder korrespondierende Einzelheiten sind in den Figuren mit denselben Bezugszeichen versehen. Es zeigen:
- **Figur 1**: ein Blockschaltbild eines primär gesteuerten Schaltnetzteils gemäß der vorliegenden Erfindung;
- **Figur 2**: einen Stromlaufplan eines primär gesteuerten Schaltnetzteils gemäß einer ersten Ausführungsform;
- **Figur 3**: einen Stromlaufplan eines Schaltnetzteils gemäß einer zweiten Ausführungsform;
- **Figur 4**: einen Stromlaufplan eines Schaltnetzteils weiteren;
- **Figur 5**: einen Stromlaufplan eines Schaltnetzteils gemäß einer dritten Ausführungsform;
- **Figur 6**: einen Stromlaufplan eines weiteren Schaltnetzteils.

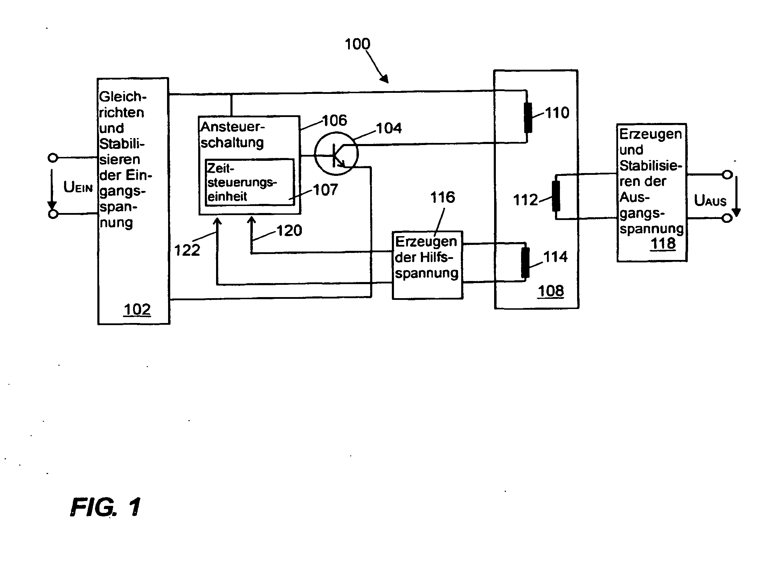

Figur 1 zeigt schematisch ein Blockschaltbild eines Schaltnetzteils gemäß der vorliegenden Erfindung.

Das Schaltnetzteil 100 wird am Eingang mit der Wechselspannung U_{EIN}, die beispielsweise Netzspannung sein kann, beaufschlagt. In Europa variiert die Netzspannung zwischen 180 V bis 264 V Wechselspannung, in Amerika zwischen 90 V und 130 V Wechselspannung. In dem Block 102 wird die Eingangsspannung gleichgerichtet und stabilisiert. Außerdem wird sichergestellt, dass Störsignale, die in dem Schaltnetzteil erzeugt werden, nicht ins Wechselspannungsnetz gelangen. Die primärseitige Wicklung 110 des isolierenden Transformators 108 und der primärseitige Schalter 104, der hier ein Transistor ist, bilden einen Serienkreis, der mit der gleichgerichteten Eingangsspannung verbunden ist. Der primärseitige Schalter 104 unterbricht den Strom, der durch die primärseitige Wicklung 110 fließt, entsprechend den Steuersignalen der Ansteuerschaltung 106. Die von der Ansteuerschaltung an den Steuereingang des primärseitigen Schalters 104 gelieferten Schaltpulse werden von dem Block 116, in welchem die Regelgröße mit Hilfe einer Hilfswicklung 114 des Transformators 108 erzeugt wird, gesteuert. Dabei bezeichnen die beiden Signalpfade 120 und 122 zwei wesentliche Funktionen des Blocks 116: Zum einen "pumpt" das Signal 120 die Ansteuerschaltung 106, um die freie Schwingung aufrecht zu erhalten. Zum anderen steuert der Signalpfad 122 die Ansteuerschaltung 106 derart, dass Änderungen in dem Schaltzyklus die elektrische Leistung, die an den Transformator 108 geliefert wird, in gewünschter Weise beeinflussen.

Erfindungsgemäß beinhaltet die Ansteuerschaltung 106 hierfür eine Zeitsteuerungseinheit 107, die gewährleistet, dass die Pausenzeiten (oder auch Ausschaltzeiten), in denen der primärseitige Schalter 104 geöffnet ist, in ihrer Länge an die benötigte Leistung angepasst sind. Die Energie, die während jeder Anschaltphase des primärseitigen Schalters in den Transformator geliefert wird, bleibt jeweils gleich.

Die sekundärseitige Wicklung 112 des Transformators 108 ist, wie aus Figur 1 ersichtlich, mit einem Block 118 verbunden, der die sekundärseitige Spannung U_{Aus} erzeugt und gegebenenfalls stabilisiert.

Im folgenden soll die Funktionsweise der in Figur 1 schematisch gezeigten Ausführungsform des erfindungsgemäßen galvanisch isolierten Schaltnetzteils genauer erläutert werden.

Die Ansteuerschaltung 106 steuert den primärseitigen Schalter 104 so an, dass er im Wechsel in den leitenden und nicht leitenden Zustand gebracht wird. Aufgrund der durch den Block 102 gelieferten Spannung fließt immer dann ein Strom in die primärseitige Wicklung 110, wenn der primärseitige Schalter 104 im leitenden Zustand ist. Eine Änderung des Stromes speichert Energie in das Magnetfeld des Transformators 108. Wenn der primärseitige Schalter 104 sperrt, entlädt sich die in dem Magnetfeld gespeicherte Energie hauptsächlich durch die sekundärseitige Wicklung 112 und in dem Block 118, der die Sekundärspannung erzeugt und stabilisiert. Ein kleiner Teil der Energie wird auch durch die Hilfswicklung 114 in den Block 116 entladen. Dieser erzeugt als Regelgröße eine Hilfsspannung. Die Energie entlädt sich periodisch, aber durch Gleichrichten und Filtern kann als Hilfsspannung eine im wesentlichen gleichgerichtete Spannung erzeugt werden. Da die magnetische Kopplung zwischen den verschiedenen Wicklungen des Transformators 108 konstant ist und nicht von den Werten des Stroms oder der Spannung abhängt, ist der Wert der Hilfsspannung proportional zum Wert der sekundären Spannung und damit zum Wert der Ausgangsspannung.

Mit Hilfe der Zeitsteuerungseinheit 107 kann die Abschaltdauer des primärseitigen Schalters 104 so eingestellt werden, dass die in den Transformator eingespeiste Energie von der Ausgangsspannung abhängt. Es wird also die übertragene Leistung so eingestellt, dass sich eine nahezu lastunabhängige Ausgangsspannung U_{Aus} ergibt. Die Erfassung der Ausgangsspannung auf der Primärseite wird dadurch erleichtert, dass die übertragene Energie bei jedem Puls gleich ist, so dass sich immer eine relativ lange Zeit ergibt, während der in der Hilfswicklung 114 Strom fließt.

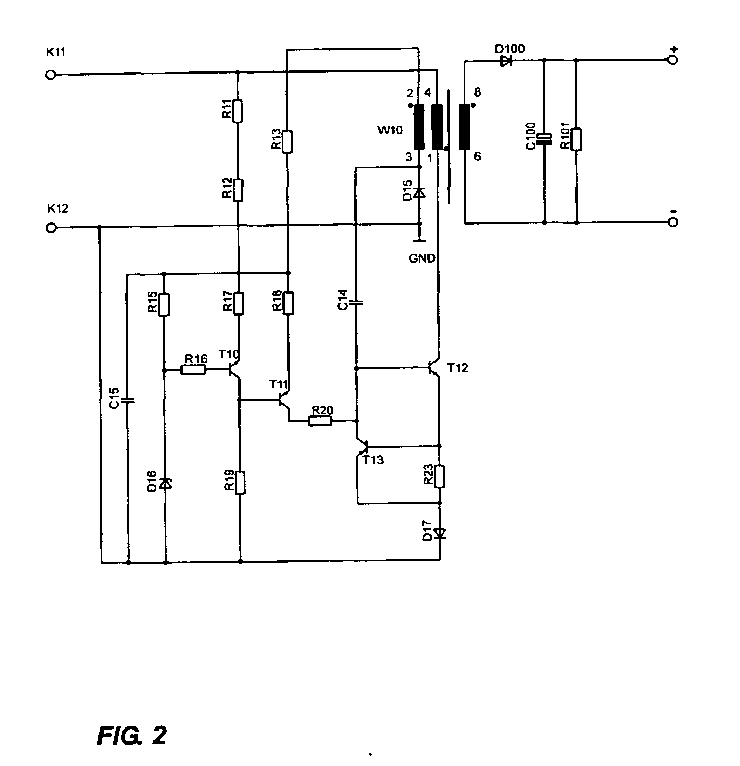

Ein Schaltbild einer möglichen Realisierungsform des erfindungsgemäßen Schaltnetzteils ist in Figur 2 gezeigt. Wesentlich an dieser Schaltung ist, dass die Abschaltdauer des primärseitigen Schalters, hier des Transistors T12, über die entsprechende Ansteuerung des Transistors T11 verlängerbar ist.

Nach dem Anlegen der Eingangsspannung U_{EIN} an die Klemmen K11 und K12 wird über die Widerstände R11 und R12 der Kondensator C15 aufgeladen. Bei ausreichender Spannung fließt ein Strom durch den Widerstand R18, die Basis-Kollektor-Strecke des Transistors T11, den Widerstand R20, die Basis-Emitter-Strecker des Transistors T12, den Widerstand R23 sowie die Diode D17 Dadurch wird der primärseitige Schalter T12 aufgesteuert, es fließt ein Strom durch die primäre Hauptwicklung des Transformators W10 (Anschluss 4/ Anschluss 1). An der Hilfswicklung des Transformators (Anschluss 3/Anschluss 2) wird eine Spannung induziert, die über den Kondensator C15, den Widerstand R23 und die Kapazität C14 eine Mitkopplung bewirkt und den Einschaltvorgang des primärseitigen Schalter T12 beschleunigt.

Nun steigt der Strom, der durch die primärseitige Hauptwicklung, den primärseitigen Schalter T12, den Widerstand R23 und die Diode D17 fließt, an. Dadurch steigt auch die Spannung, die am Widerstand R23 abfällt, und damit auch die Basis-Emitter-Spannung des Transistors T13. Wenn die Basis-Emitter-Spannung des Transistors T13 die Schwellenspannung überschreitet, wird die Kollektor-Emitter-Strecke von T13 leitend und in der Folge wird der Transistor T12 abgeschaltet. Dadurch wird der Stromfluss in der primärseitigen Wicklung des Transformators unterbrochen und aufgrund der Selbstinduktion kehren sich die Spannungen an den Wicklungen des Transformators um. Sowohl in der sekundärseitigen Wicklung wie auch in der Hilfswicklung fließt ein induzierter Strom.

Der Strom in der sekundärseitigen Wicklung lädt den Kondensator C100 und erzeugt so eine Spannung, die am Ausgang genutzt werden kann. Der Strom in der Hilfswicklung lädt über die Diode D15 und den Widerstand R13 den Kondensator C15 auf eine Spannung, die der Spannung am Kondensator C100, umgerechnet über das Wndungszahlverhältnis der Hilfswicklung zur Sekundärwicklung, entspricht. Das heißt, an dem Kondensator C15 entsteht ein Abbild der an dem Kondensator C100 abfallenden Ausgangsspannung. Der Strom in der Hilfswicklung bewirkt außerdem über den Kondensator C14 eine Beschleunigung des Abschaltens des Transistors T12.

Wenn die Spannung, die an dem Kondensator C15 abfällt, kleiner ist als die Summe der Schwellenspannungen der Diode D16 und des Transistors T10, ist der Transistor T10 gesperrt, und der Transistor T11 ist leitend, so dass der Kondensator C14 über die Reihenschaltung des Widerstands R18, des Transistors T12 und des Widerstands R20 schnell geladen wird. Somit wird der primärseitige Schalter T12 nach einer kurzen Pause wieder eingeschaltet und ein neuer Zyklus beginnt.

Überschreitet die Spannung an C15 die Summe der Schwellenspannungen der Diode D16 und des Transistors T10, wird der Transistor T10 leitend und verringert so den Basisstrom des Transistors T11, so dass dieser den Ladestrom des Kondensators C14 begrenzt und damit die Abschaltdauer des primärseitigen Schalters T12 verlängert.

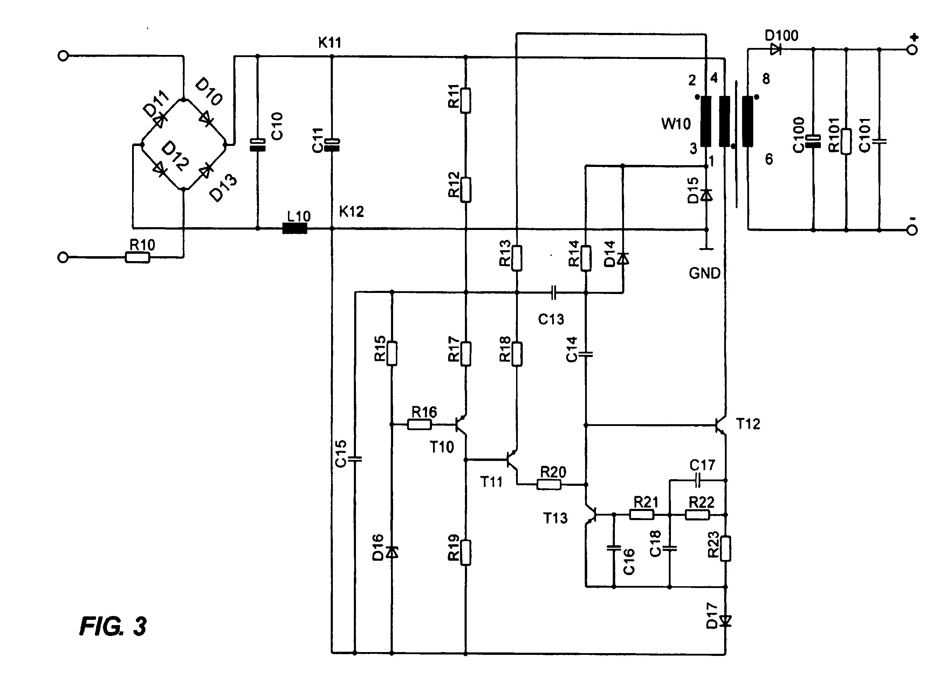

Mit der gezeigten Schaltung kann daher auf besonders einfache Weise durch Einstellen der Abschaltdauer die übertragene Leistung unabhängig von der angeschlossenen Last an die Ausgangsspannung angepasst werden. Die Erfassung der Ausgangsspannung wird, wie bereits erwähnt, dadurch erleichtert, dass die übertragene Energie bei jedem Puls gleich ist, so dass sich immer eine relativ lange Zeit ergibt, während der in der Sekundärwicklung Strom fließt. Kurze Spannungsspitzen, die durch Streuinduktivitäten entstehen, können mit entsprechen dimensionierten RC-Gliedem R13, C13, R14, D14, wie dies in Figur 3 dargestellt ist, herausgefiltert werden. Dadurch stellt die Bildspannung an den Kondensator C15 ein sehr genaues Abbild der Spannung, die an dem Kondensator C100 abfällt, dar.

Eine Begrenzung des Ausgangsstroms ergibt sich durch die mit Hilfe der Widerstände R18 und R20 einstellbare Maximalfrequenz. Diese legt den Maximalleistungspunkt fest. Bei Überschreitung des Maximalleistungspunktes sinkt die Ausgangsspannung und somit auch die Spannung, die an dem Kondensator C15 abfällt. Dadurch sinkt auch der Strom durch die Widerstände R18 und R20, und infolgedessen sinken die Frequenz und die übertragene Leistung. Durch Veränderung des Verhältnisses der Widerstandswerte R18 zu R20 kann die Abhängigkeit des Ausgangsstroms von der Ausgangsspannung eingestellt werden, so dass unterschiedliche Kennlinien möglich sind.

Die in Figur 2 gezeigte Ausführungsform weist jedoch noch eine Abhängigkeit des Ausgangsstroms von der Eingangsspannung auf, da die Verzögerungszeiten an dem primärseitigen Schalter T12 einen eingangsspannungsabhängigen maximalen Primärstrom verursachen.

Dem kann entgegengewirkt werden, indem, wie aus Figur 3, in der eine zweite Ausführungsform des erfindungsgemäßen Schaltnetzteils gezeigt ist, ersichtlich, eine Kapazität C17 mit dem Emitter des primärseitigen Schalters verbunden wird. In diesem Fall kann die Kapazität C18 durch einen Widerstand ersetzt werden. Im übrigen sind in der Figur 3 Bauelemente mit denselben Bezeichnungen wie in Figur 2 mit den gleichen Bezugszeichen versehen.

Wenn bei abgeschaltetem primärseitigem Schalter T12 der Sekundärstrom auf 0 abgesunken ist, liegt an der sekundärseitigen Wicklung eine Spannung in Höhe der Ausgangsspannung U_{Aus} zuzüglich der Flussspannung der Diode D100 an. Mit dieser Spannung sind die parasitären Kapazitäten geladen. Diese Kapazitäten bilden mit dem Transformator W10 einen Schwingkreis, und die Schwingung, die durch die in den parasitären Kapazitäten gespeicherte Energie verursacht wird, bewirkt unter Umständen ein vorzeitiges Wiedereinschalten des Transistors T12. Dies wiederum führt zu einer kurzzeitigen Regelabweichung und somit zu einer erhöhten Welligkeit der Ausgangsspannung U_{AUS}. Um dies zu verhindern, wird die Spannung der Hilfswicklung gemäß der in Figur 3 gezeigten erweiterten Ausführungsform über ein aus der Kapazität C13, den Widerstand R14, der Diode D14 und dem Widerstand R 13 gebildeten Filter an den Kondensator C14 geführt.

In der Figur 3 ist außerdem ein durch den Kondensator C16, den Widerstand R21, den Widerstand R22 und den Kondensator C18 gebildetes Verzögerungsglied vorgesehen, welches das Ansteigen der Basis-Emitter-Spannung an dem Transistor T13 aufgrund des Spannungsanstiegs über den Widerstand R23 verzögert. Dieses Verzögerungsglied ist für die Funktion der Schaltung nicht unbedingt erforderlich, erhöht aber den Wirkungsgrad, da aufgrund der Phasenverschiebung der Abschaltvorgang des Transistors C12 beschleunigt wird.

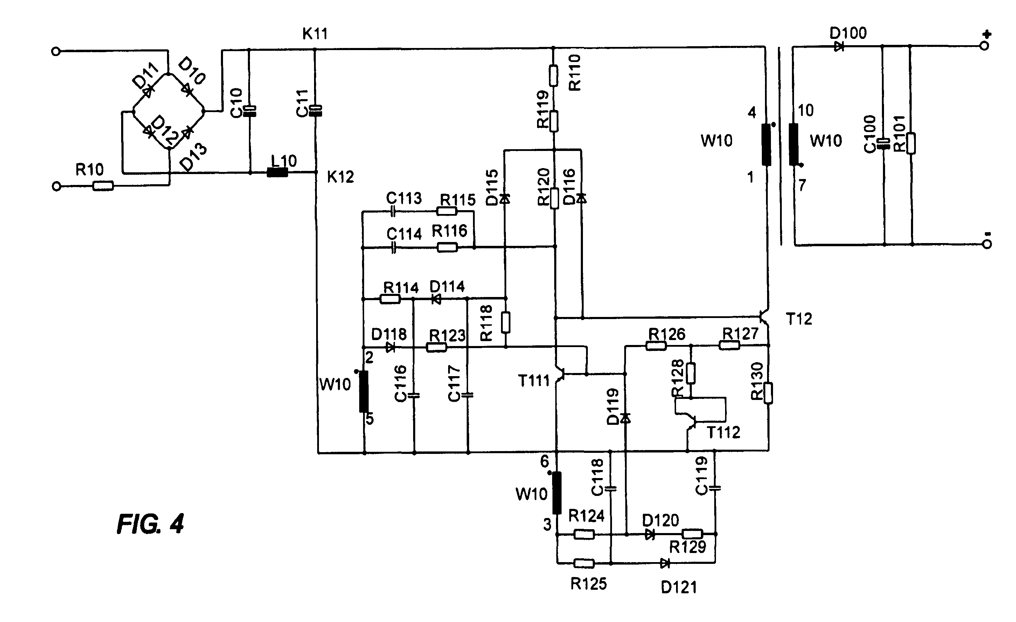

Bei einem Schaltnetzteil, das in Form eines Stromlaufplanes in Figur 4 dargestellt ist, kann eine zweite Hilfswicklung zur Leistungsregelung vorgesehen sein.

Das in Figur 4 gezeigte Schaltnetzteil mit galvanischer Trennung zwischen Primär- und Sekundärteil stellt ebenfalls einen freischwingenden Sperrwandler dar. Mit der zusätzlichen primärseitigen Hilfswicklung W10 3-6 wird über den Widerstand R124 während der Einschaltzeit des primärseitigen Schalters T110 an der Anode der Diode D119 eine negative Spannung erzeugt. (Anstelle des Widerstands R124 könnte auch eine Diode verwendet werden.) Dadurch kann an der Anode der Diode D119 ein Strom eingespeist werden, mit dem die Einschaltzeit des Transistors T111 verlängert wird, ohne die Abschaltschwelle zu beeinflussen.

Somit ist ein Steuerung der Abschaltdauer des Transistors T110 möglich. Dies führt zu einer geringen Schaltfrequenz bei geringer Last, und die Verlustleistung im Leerlauf und bei geringer Last sinkt. Die Sekundärspannung kann relativ genau mit Hilfe der primären Hilfswicklungen bestimmt werden.

Mit Hilfe der Diode D120, des Widerstands R129, der Kapazität C119 und der Diode D121 ist nun eine einfache Spannungsbegrenzung möglich. Das RC-Glied R125, C118 filtert dabei die induzierten Spannungsspitzen der Streuinduktivität heraus und verbessert somit das Regelverhalten. Der Widerstand R125 dient einer Spitzenstrombegrenzung zum Schutz der Diode D121.

Die Parallelschaltung der RC-Glieder C113, R115 und C114, R116 bewirkt ein niederohmiges Umschalten des Transistors T111 bei relativ geringem Haltestrom. Darüber hinaus kann durch die Kombination einer relativ großen Kapazität C114 mit einem großen Widerstandswert R116 der Transistor T110 verzögert eingeschaltet werden, da die Energie in den Kondensator 114 nur langsam abgebaut wird. Somit kann eine kontinuierliche Anpassung der Pausendauer an die Last erfolgen.

Eine Verbesserung des Regelverhaltens bei sehr geringer Last kann in der gezeigten Ausführungsform mit Hilfe der Diode D114 der Kapazität C117, der Diode 115 und des Widerstands R120 bzw. der Diode D116 erfolgen. Durch diese Schaltung werden bei steigender Ausgangsspannung die Kondensatoren C113 und C114 schneller entladen und langsamer aufgeladen. Dadurch sind sehr lange Pausenzeiten möglich, die automatisch bei steigender Ausgangsspannung verlängert werden. Diese Schaltung wirkt außerdem als Überspannungsschutz und verhindert bei einem einfachen Fehler ein gefährliches Ansteigen der Ausgangsspannung U_{AUS}.

Mit Hilfe des RC-Gliedes R114, C116 können die induzierten Spannungsspitzen der Streuinduktivität herausgefiltert werden, wodurch das Regelverhalten weiter verbessert werden kann.

Zur Verringerung der Abhängigkeit des Ausgangsstroms von der Ausgangsspannung kann die Einschaltschwelle des Transistors T111 über den Widerstand R118 angepasst werden.

Weiterhin kann mit Hilfe des Widerstands R123 und der Diode D118 die Einschaltschwelle des Transistors T111 zur Verringerung der Abhängigkeit des Ausgangsstroms von der Eingangsspannung angepasst werden.

Schließlich ist in dem in Figur 4 gezeigten Schaltnetzteil zur Verringerung der Temperaturabhängigkeit des Ausgangsstroms eine Temperaturkompensationsschaltung vorgesehen, die den Transistor T112, den Widerstand R128 und den Widerstand R127 umfasst.

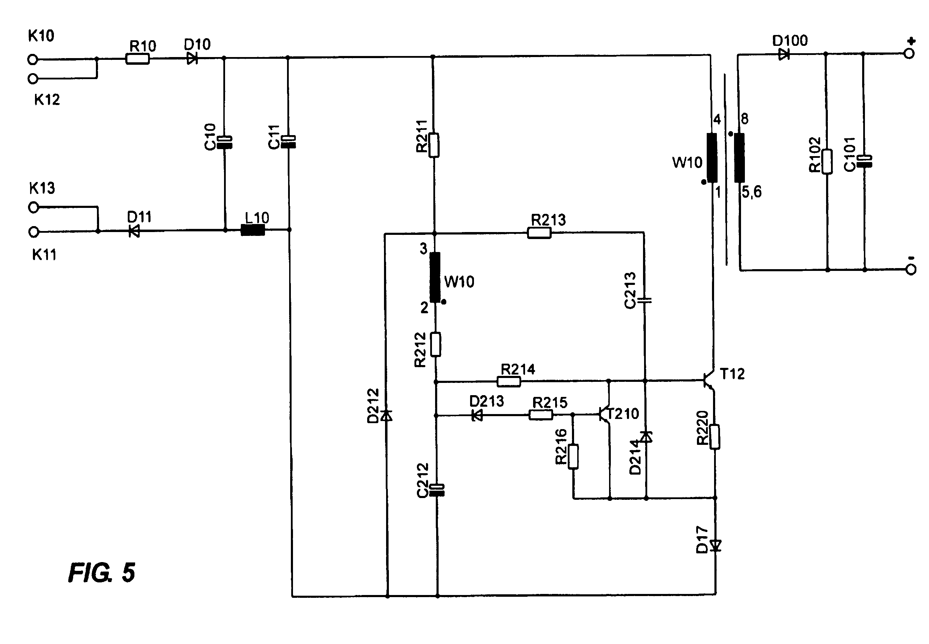

Eine weitere Ausführungsform des erfindungsgemäßen Schaltnetzteils soll im folgenden mit Bezug auf Figur 5 erläutert werden. Dabei ist die Funktionsweise der gezeigten Schaltung dieselbe wie die der Schaltungen aus den Figuren 2 und 3 mit dem Unterschied, dass die Schaltung gemäß Figur 5 mit wesentlich weniger Bauelementen auskommt, weil die Regelung des Ladestroms für den Ansteuerkondensator C213 einfacher realisiert ist. Die Abschaltung des primärseitigen Schalters T12 erfolgt durch eine Zener-Diode D214, welche die Spannung an der Reihenschaltung der Basis-Emitter-Strecke des primärseitigen Schalters T12 und des Widerstands R220 begrenzt. Bei Erreichen der Z-Spannung kann der Stromfluss durch den Transistor T210 nicht weiter ansteigen, dadurch sinkt die Spannung an dem Transformator und die Mitkopplung bewirkt ein schnelles Abschalten des primärseitigen Schalters T12.

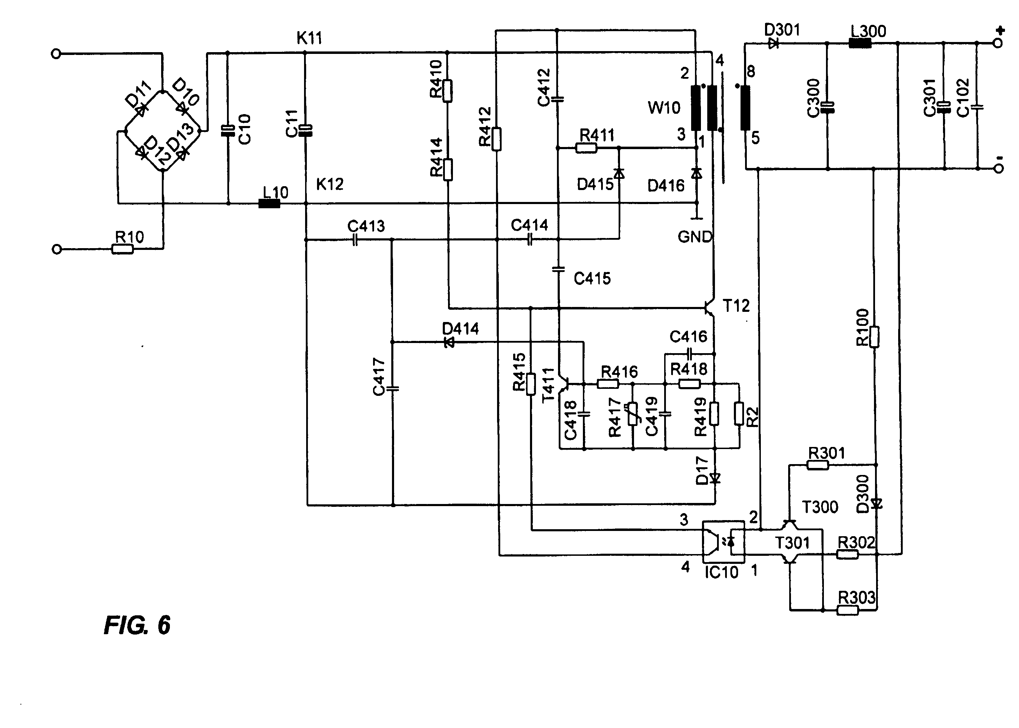

Mit Bezug auf Figur 6 soll nunmehr ein weiteres Schaltnetzteil beschrieben werden, bei dem ein zusätzlicher Optokoppler zur Rückkopplung der Ausgangsspannung an die Primärseite eingesetzt wird. Es sind verschiedene Schaltungen für Schaltnetzteile mit geringer Leerlaufeingangsleistungen bekannt, die bei Unterschreitung einer festgelegten Ausgangsleistung den Primärteil des Netzteils mittels eines Optokopplers ausschalten und dadurch eine sehr geringe Eingangsleistung ermöglichen. Nachteil dieses bekannten Prinzips ist jedoch, dass im Leerlauf die Ausgangsspannung eine sehr große Ripplespannung aufweist.

Bei einem Schaltnetzteil, wie in Figur 6 gezeigt, kann die Spannungsregelung mittels des Optokopplers IC10 und einer sekundärseitigen Regelschaltung ausgeführt werden. Dabei wird der Optokoppler IC10 so angesteuert, dass er bei Unterschreitung der Regelspannung leitend ist. Dadurch arbeitet das Schaltnetzteil unterhalb der Regelspannung mit maximaler Frequenz, wobei die Frequenz durch einen zum Optokoppler IC10 in Reihe geschalteten Widerstand R415 begrenzt wird. Bei Erreichen der Regelspannung wird der Optokoppler IC10 soweit gesperrt, dass die Schaltfrequenz auf die Frequenz absinkt, die erforderlich ist, um die Regelspannung am Ausgang aufrecht zu erhalten. Ist der Optokoppler IC10 vollständig gesperrt, geht die Schaltfrequenz auf die Minimalfrequenz zurück, bei der nur eine sehr geringe Leistung übertragen wird. In diesem Zustand ist die aufgenommene Leistung der Schaltung sehr gering. Somit ist es möglich, trotz der sehr geringen Leerlaufeingangsleistung auch im Leerlauf den Spannungsripple relativ klein zu halten.

Eine Strombegrenzung kann dabei auf der Sekundärseite realisiert werden und denselben Optokoppler IC10 nutzen.

Alternativ kann die Strombegrenzung auch auf der Primärseite realisiert werden. Dabei wird zur Ansteuerung des primärseitigen Schalters T12 über den Optokoppler lC10 und den Vorwiderstand R415 eine Spannung aus der Hilfswicklung W10 2-3 benutzt, die proportional zur Ausgangsspannung ist. Dadurch sinkt bei fallender Ausgangsspannung der Ladestrom des Kondensators C414 und die Frequenz sinkt. Es wird eine geringere Leistung übertragen und der Ausgangsstrom bleibt nahezu konstant. Durch verschiedene Dimensionierungen sind unterschiedliche Ausgangskennlinien möglich. Allen gemeinsam ist, dass der Kurzschlussstrom sehr gering ist, da im Kurzschluss der Optokoppler gesperrt ist.

Im Unterschied zu bekannten Verfahren, bei denen Optokoppler eingesetzt werden, wird hier die Minimalfrequenz und damit die Minimalleistung bei gesperrtem Optokoppler, die Maximalfrequenz bei leitendem Optokoppler erreicht. Die Stromregelung erfolgt durch Steuerung der Schaltfrequenz in Abhängigkeit von der durch eine Hilfswicklung übertragenen Ausgangsspannung.

## Patentansprüche

1. Schaltnetzteil mit einer Primärseite und einer Sekundärseite und mit
einem Transformator (108; W10) mit einer primärseitigen Wicklung (110), einer sekundärseitigen Wicklung (112) und mindestens einer Hilfswicklung (114), wobei die primärseitige Wicklung (110) und die Hilfswicklung (114) mit der Primärseite verbunden sind und die sekundärseitige Wicklung (112) mit der Sekundärseite verbunden ist,
einem primärseitigen Schalter (104;T12), der mit der primärseitigen Wicklung (110) verbunden ist, um einen Stromfluss durch die primärseitige Wicklung (110) zu unterbrechen,
einer frei schwingenden Ansteuerschaltung (106) zum Erzeugen vom Schaltpulsen, die den primärseitigen Schalter (104;T12) ansteuern,
einer Schaltung (116) zum Erzeugen einer Bildspannung zwischen den Anschlüssen der Hilfswicklung (114), um eine Bildspannung zu erzeugen, die auf der Primärseite eine zu regelnde Spannung auf der Sekundärseite abbildet,
wobei das Schaltnetzteil weiterhin eine Zeitsteuerungseinheit (107) aufweist, die so mit dem primärseitigen Schalter (104; T12) gekoppelt ist, dass die Dauer einer Ausschaltzeit des primärseitigen Schalters (104; T12) innerhalb eines Schaltzyklus einstellbar ist,
**dadurch gekennzeichnet, dass**
die Zeitsteuerungseinheit (107) einen Ansteuerkondensator (C14; C213) aufweist, über dessen Ladestrom die Ausschaltzeit des primärseitigen Schalters (T12) einstellbar ist.

2. Schaltnetzteil nach Anspruch 1, **dadurch gekennzeichnet, dass** die Zeitsteuerungseinheit (107) eine Diode (D17) aufweist, die so zwischen dem primärseitigen Schalter (T12) und einem Eingangsanschluss (K12) des Schaltnetzteils angeordnet ist, dass der Ladestrom des Ansteuerkondensators (C14; C213) während der Ausschaltzeit des primärseitigen Schalters begrenzbar ist.

3. Schaltnetzteil nach einem der Ansprüche 1 oder 2, **dadurch gekennzeichnet, dass** der Ladestrom des Ansteuerkondensators (C14) durch eine Ladestromsteuerschaltung (R15, D16, R17, T10, R19, T11, R18, R20, R16), die zwischen dem Eingangsanschluss (K12) des Schaltnetzteils und einem Steueranschluss des primärseitigen Schalters (T12) angeordnet ist, steuerbar ist.

4. Schaltnetzteil nach Anspruch 3, **dadurch gekennzeichnet, dass** die Ladestromsteuerschaltung zwei Verstärker (T10, T11) aufweist, die miteinander in Serie geschaltet sind.

5. Schaltnetzteil nach einem der Ansprüche 1 bis 4, **dadurch gekennzeichnet, dass** eine Schwingungsunterdrückungsschaltung (C13, R14, D14, R13) so mit der Hilfswicklung verschaltet ist, dass unerwünschte Schwingungen im Ansteuerkreis des primärseitigen Schalters unterdrückt werden.

6. Schaltnetzteil nach einem der Ansprüche 1 bis 5, **dadurch gekennzeichnet, dass** eine Phasenschieberschaltung (T13, C16, R21, C18, R22) zum phasenverschobenen Abschalten des primärseitigen Schalters vorgesehen ist.

7. Schaltnetzteil nach einem der Ansprüche 1 bis 6, **dadurch gekennzeichnet, dass** die Zeitsteuerungseinheit so ausgebildet ist, dass während einer Einschaltzeit des primärseitigen Schalters (T110) ein Regelsignal deaktivierbar ist.

8. Schaltnetzteil nach Anspruch 3, **dadurch gekennzeichnet, dass** die Ladestromsteuerschaltung eine erste Zener-Diode (D213) aufweist, die so über einen Widerstand (R215) mit der Basis eines Ansteuertransistors (T210) verbunden ist, dass die Einschaltdauer des Ansteuertransistors (T210) das Einschalten des primärseitigen Schalters (T12) verzögert.

9. Schaltnetzteil nach Anspruch 8, **dadurch gekennzeichnet, dass** die Ladestromsteuerschaltung weiterhin eine zweite Zener-Diode (D214) aufweist, die parallel zu der Serienschaltung der Basis-Emitter-Strecke des primärseitigen Schalters (T12) und eines mit dem Emitter des primärseitigen Schalters (T12) verbundenen Widerstandes (R420) geschaltet ist.

10. Schaltnetzteil nach einem der Ansprüche 1 bis 9, **dadurch gekennzeichnet, dass** es weiterhin eine Temperaturkompensationsschaltung (T111, R126, R127, R128, T112) zur Temperaturkompensation der Schaltschwelle des primärseitigen Schalters (T110) aufweist.

11. Schaltnetzteil nach einem der Ansprüche 1 bis 10, **dadurch gekennzeichnet, dass** es weiterhin einen Optokoppler (IC10) zum Rückkopplung einer sekundärseitigen Spannung in den Primärkreis aufweist.

12. Schaltnetzteil nach Anspruch 11, **dadurch gekennzeichnet, dass** der Optokoppler (IC10) so verbunden ist, dass in einem gesperrten Zustand des Optokopplers eine minimale Leistung und in einem leitenden Zustand eine maximale Leistung übertragbar ist.

## Claims

1. Switched-mode power supply with a primary side and a secondary side and with
a transformer (108; W10) with a primary winding (110), a secondary winding (112) and at least one auxiliary winding (114), the primary winding (110) and the auxiliary winding (114) being connected to the primary side and the secondary winding (112) being connected to the secondary side,
a primary switch (104; T12), which is connected to the primary winding (110), to interrupt a current flow through the primary winding (110),
a freely oscillating drive circuit (106) for generating switching pulses, which drive the primary switch (104; T12),
a circuit (116) for generating an image voltage between the terminals of the auxiliary winding (114) in order to generate an image voltage that on the primary side maps a voltage to be controlled on the secondary side,
the switched-mode power supply having furthermore a timing unit (107), which is coupled to the primary switch (104; T12) such that the duration of a turn-off time of the primary switch (104; T12) is variable within a duty cycle,
**characterized in that**
the timing unit (107) has a drive capacitor (C14; C213), via the charging current of which the turn-off time of the primary switch (T12) is variable.

2. Switched-mode power supply according to claim 1, **characterized in that** the timing unit (107) has a diode (D17), which is arranged between the primary switch (T12) and an input terminal (K12) of the switched-mode power supply such that the charging current of the drive capacitor (C14; C213) can be limited during the turn-off time of the primary switch.

3. Switched-mode power supply according to one of claims 1 or 2, **characterized in that** the charging current of the drive capacitor (C14) can be controlled by a charging current control circuit (R15, D16, R17, T10, R19, T11, R18, R20, R16), which is arranged between the input terminal (K12) of the switched-mode power supply and a control terminal of the primary switch (T12).

4. Switched-mode power supply according to claim 3, **characterized in that** the charging current control circuit has two amplifiers (T10, T11), which are connected to one another in series.

5. Switched-mode power supply according to one of claims 1 to 4, **characterized in that** an oscillation suppression circuit (C13, R14, D14, R13) is wired to the auxiliary winding such that undesirable oscillations in the drive circuit of the primary switch are suppressed.

6. Switched-mode power supply according to one of claims 1 to 5, **characterized in that** a phase shifting circuit (T13, C16, R21, C18, R22) is provided for the phase-displaced tripping of the primary switch.

7. Switched-mode power supply according to one of claims 1 to 6, **characterized in that** the timing unit is formed so that a control signal can be deactivated during a turn-on time of the primary switch (T110).

8. Switched-mode power supply according to claim 3, **characterized in that** the charging current control circuit has a first Zener diode (D213), which is connected via a resistor (R215) to the base of a drive transistor (T210) such that the turn-on duration of the drive transistor (T210) delays the turn-on of the primary switch (T12).

9. Switched-mode power supply according to claim 8, **characterized in that** the charging current control circuit also has a second Zener diode (D214), which is connected parallel to the series circuit of the base-emitter junction of the primary switch (T12) and of a resistor (R420) connected to the emitter of the primary switch (T12).

10. Switched-mode power supply according to one of claims 1 to 9, **characterized in that** it also has a temperature compensation circuit (T111, R126, R127, R128, T112) for temperature compensation of the switching threshold of the primary switch (T110).

11. Switched-mode power supply according to one of claims 1 to 10, **characterized in that** it also has an optical coupler (IC10) for the feedback of a secondary voltage into the primary circuit.

12. Switched-mode power supply according to claim 11, **characterized in that** the optical coupler (IC10) is connected such that in a blocked state of the optical coupler a minimal output and in a conductive state a maximal output can be transmitted.

## Revendications

1. Alimentation à découpage avec un côté primaire et un côté secondaire et avec :
un transformateur (108 ; W10) avec un enroulement côté primaire (110), un enroulement côté secondaire (112) et au moins un enroulement auxiliaire (114), dans laquelle l'enroulement côté primaire (110) et l'enroulement auxiliaire (114) sont reliés au côté primaire et l'enroulement côté secondaire (112) sont relié au côté secondaire,
un interrupteur côté primaire (104 ; T12) qui est relié à l'enroulement côté primaire (110) pour interrompre un flux de courant à travers l'enroulement côté primaire (110),
un circuit de commande (106) oscillant librement pour produire des impulsions de commutation qui commandent l'interrupteur côté primaire (104 ; T12),
un circuit (116) pour produire une tension image entre les bornes de l'enroulement auxiliaire (114) afin de produire une tension image qui reproduit du côté primaire une tension à réguler du côté secondaire,
l'alimentation à découpage comportant en outre une unité de commande temporelle (107) qui est couplée à l'interrupteur côté primaire (104 ; T12) de telle sorte que la durée d'un temps de mise hors circuit de l'interrupteur côté primaire (104 ; T12) est réglable à l'intérieur d'un cycle de commutation,
**caractérisée par le fait que**
l'unité de commande temporelle (107) comporte un condensateur de commande (C14 ; C213) par l'intermédiaire du courant de charge duquel le temps de mise hors circuit de l'interrupteur côté primaire (T12) est réglable.

2. Alimentation à découpage selon la revendication 1, **caractérisée par le fait que** l'unité de commande temporelle (107) comporte une diode (D17) qui est placée de telle sorte entre l'interrupteur côté primaire (T12) et une borne d'entrée (K12) de l'alimentation à découpage que le courant de charge du condensateur de commande (C14 ; C213) peut être limité pendant le temps de mise hors circuit de l'interrupteur côté primaire.

3. Alimentation à découpage selon l'une des revendications 1 ou 2, **caractérisée par le fait que** le courant de charge du condensateur de commande (C14) peut être commandé par un circuit de commande de courant de charge (R15, D16, R17, T10, R19, T11, R18, R20, R16) qui est placé entre la borne d'entrée (K12) de l'alimentation à découpage et une borne de commande de l'interrupteur côté primaire (T12).

4. Alimentation à découpage selon la revendication 3, **caractérisée par le fait que** le circuit de commande de courant de charge comporte deux amplificateurs (T10, T11) qui sont branchés ensemble en série.

5. Alimentation à découpage selon l'une des revendications 1 à 4, **caractérisée par le fait qu'**un circuit de suppression d'oscillation (C13, R14, D14, R13) est branché de telle sorte avec l'enroulement auxiliaire que des oscillations indésirables dans le circuit de commande de l'interrupteur côté primaire sont supprimées.

6. Alimentation à découpage selon l'une des revendications 1 à 5, **caractérisée par le fait qu'**un circuit de déphasage (T13, C16, R21, C18, R22) est prévu pour la coupure avec déphasage de l'interrupteur côté primaire.

7. Alimentation à découpage selon l'une des revendications 1 à 6, **caractérisée par le fait que** l'unité de commande temporelle est conçue de telle sorte qu'un signal de régulation peut être désactivé pendant un temps de mise en circuit de l'interrupteur côté primaire (T110).

8. Alimentation à découpage selon la revendication 3, **caractérisée par le fait que** le circuit de commande de courant de charge comporte une première diode Zener (D213) qui est reliée par l'intermédiaire d'une résistance (R215) à la base d'un transistor de commande (T210) de telle sorte que la durée de mise en circuit du transistor de commande (T210) retarde la mise en circuit de l'interrupteur côté primaire (T12).

9. Alimentation à découpage selon la revendication 8, **caractérisée par le fait que** le circuit de commande de courant de charge comporte aussi une deuxième diode Zener (D214) qui est branchée en parallèle avec le circuit série composé de la liaison base-émetteur de l'interrupteur côté primaire (T12) et d'une résistance (R220) reliée à l'émetteur de l'interrupteur côté primaire (T12).

10. Alimentation à découpage selon l'une des revendications 1 à 9, **caractérisée par le fait qu'**elle comporte aussi un circuit compensateur de température (T111, R126, R127, R128, T112) pour la compensation de température du seuil de commutation de l'interrupteur côté primaire (T110).

11. Alimentation à découpage selon l'une des revendications 1 à 10, **caractérisée par le fait qu'**elle comporte aussi un coupleur optoélectronique (IC10) pour la rétroaction d'une tension côté secondaire dans le circuit primaire.

12. Alimentation à découpage selon la revendication 11, **caractérisée par le fait que** le coupleur optoélectronique (IC10) est relié de telle sorte qu'une puissance minimale peut être transmise lorsque le coupleur optoélectronique est dans un état bloqué et qu'une puissance maximale peut être transmise lorsque le coupleur optoélectronique est dans un état conducteur.
